# FASCICULE DE BREVET EUROPEEN

(11) **EP 2 909 490 B1**
(45) Date de publication et mention de la délivrance du brevet: **11.04.2018**
(21) Numéro de dépôt: 13785565.6
(22) Date de dépôt: 15.10.2013
(51) Int. Cl.: F16C 23/04, F16C 33/18, F16C 33/20, F16C 33/28, B29C 70/86

(54) **ENSEMBLE D'ARTICULATION AUTOLUBRIFIANT RÉALISÉ À PARTIR DE MATÉRIAU COMPOSITE ET FONCTIONNANT SOUS FORTES CHARGES EN REGIME DYNAMIQUE**
SELBSTSCHMIERENDE SCHARNIERANORDNUNG AUS VERBUNDSTOFF UND BETRIEB UNTER HOHEN DYNAMISCHEN LASTEN
SELF-LUBRICATING HINGE ASSEMBLY MADE FROM COMPOSITE MATERIAL AND OPERATING UNDER HIGH DYNAMIC LOADS

(30) Priorité: 22.10.2012 FR 1260031
(43) Date de publication de la demande: 26.08.2015
(73) Titulaire: H.E.F., 42160 Andrezieux-Boutheon (FR)
(72) Inventeur: MASSE, Emmanuel, F-42110 Feurs (FR); BLANDENET, Olivier, F-38240 Meylan (FR); MAURIN-PERRIER, Philippe, 42680 Saint Marcellin En Forez (FR)
(74) Mandataire: Cabinet Laurent & Charras
(86) Numéro de dépôt international: PCT/FR2013/052458
(87) Numéro de publication internationale: WO 2014/064366

(56) Documents cités:
- WO-A2-2006/037083
- FR-A5- 2 038 659
- FR-A5- 2 117 062
- US-A- 2 835 539
- US-A- 5 431 500

## Description

L'invention se rattache au secteur technique des articulations autolubrifiantes, notamment pour le montage d'un axe dans une rotule ou palier permettant un guidage en translation et/ou en rotation.

L'invention trouve une application avantageuse pour tous les types d'articulation nécessitant un fonctionnement sans graisse c'est-à-dire en fonctionnement autolubrifiant et travaillant sous fortes charges en régime dynamique.

Le but recherché selon l'invention est d'obtenir une articulation auto lubrifiante réalisée en polymère homogène sur toute son épaisseur sans substrat de renfort et fonctionnant sous des fortes charges, par exemple, supérieures à 60 Mpa en dynamique.

Selon l'état de la technique ce type d'articulation polymère composite ne donne pas totalement satisfaction en présentant une faible tenue à la charge et des risques de fluage et de délaminage sous charge dynamique y compris pour des charges inférieures à 60 Mpa. Par exemple on connait des rotules autolubrifiantes composées d'une cage polymère composite ou avec un revêtement de frottement composite et d'une sphère en chrome ou en inox. Toutefois, des problèmes de grippage apparaissent entre la sphère et l'axe. On connait également des rotules entièrement en polymères mais ne tenant pas aux charges dynamiques supérieures à 40 Mpa.

L'invention s'est fixée pour but de remédier à ces inconvénients de manière simple, sûre, efficace et rationnelle.

Par ailleurs le document FR 2 117 062 décrit un ensemble d'articulation auto lubrifiant avec une rotule présentant une garniture en tissu imprégné de résine appliquée sur un substrat de renfort de la rotule, cet ensemble d'articulation correspondant au préambule de la revendication 1. Le problème que se propose de résoudre l'invention est d'autolubrifier les deux contacts d'une rotule, à savoir, entre la sphère et la cage d'une part, et la sphère et l'axe d'autre part, avec pour objectif d'obtenir un démontage facile du contact sphère / axe, l'articulation considérée étant adaptée pour des fortes pressions de contact supérieures à 40 Mpa.

Selon l'invention, la rotule est réalisée sur toute son épaisseur à partir d'un enroulement d'un tissu de faible épaisseur comprise entre 20 µm et 150 µm et de préférence entre 20 µm et 130 µm et mélangé avec une résine comprenant des charges, ledit tissu se présentant sous forme de bandes de largeur comprise entre 5 mm et 200 mm, lesdites bandes étant croisées selon plusieurs couches, selon la technique de l'enroulement filamentaire.

Il résulte de ces caractéristiques une meilleure homogénéité avec l'utilisation de bandes plus fines et une meilleure résistance aux efforts tangentiels de frottement grâce à un croissement des couches de tissu composant le matériau.

Il en résulte également une meilleure tenue à la charge dynamique due au croisement des bandes et une meilleure tenue à la charge statique due à une meilleur homogénéité du matériau.

Avantageusement, l'angle de croisure est compris entre 10° et 90° et de préférence entre 30° et 86°.

Suivant d'autres caractéristiques, la résine est du type époxy, vinylester, polyester, phénolique, polyimid ..., tandis que les charges sont de type PTFE, MoS2, graphite.

A noter que les charges représentent entre 5 et 70 % du volume.

Suivant une autre caractéristique l'alésage de la bague et sa périphérie présentent un revêtement autolubrifiant.

L'invention est exposée ci-après plus en détail à l'aide des dessins annexés dans lesquels :
- La fig. 1 est une vue en coupe longitudinale de l'ensemble d'articulation composé par d'une sphère ou rotule autolubrifiante engagée dans une cage autolubrifiante et réalisée en tissu déposé par croissement selon les caractéristiques de l'invention pour obtenir une meilleur homogénéité.
- La fig. 2 est une vue correspondant à la figure 1 après mise en place d'un axe dans l'alésage de la rotule.

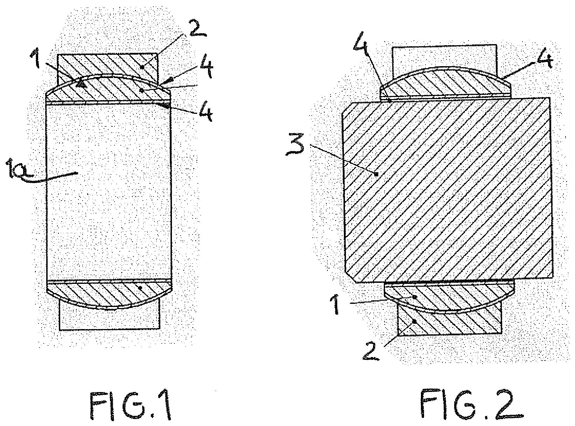

Comme indiqué, la figure 1 montre une rotule ou sphères d'articulation (1) autolubrifiante engagée dans une cage (2). L'alésage (1a) de la rotule (1) est destiné à recevoir avec capacité de coulissement en rotation, un axe (3).

L'alésage de la rotule ainsi que sa périphérie sont revêtus d'une matière autolubrifiante (4). Le but cherché est d'éviter tout effet de grippage.

Selon l'invention, la rotule d'articulation autolubrifiante (1) est réalisée à partir d'un enroulement d'un tissu synthétique de faible épaisseur comprise entre 20 µm et 150 µm et avantageusement entre 20 µm et 130 µm.

Le tissu, qui se présente sous forme de bandes, est mélangé avec une résine de type époxy, vinylester, polyester, phénolique, polyimid...

Cette résine comprend des charges de type PTFE, MoS2, graphite ..., de l'ordre de 5 à 70 % du volume. Le but recherché est d'obtenir un produit homogène sur toute son épaisseur.

Les bandes de tissu ont une largueur comprise entre 5 mm et 200 mm et sont enroulées sur un mandrin de diamètre déterminé, selon la technique de l'enroulement filamentaire.

Les bandes sont enroulées et croisées selon plusieurs couches, l'angle de croisure étant compris entre 10° et 90° et avantageusement entre 30° et 86°. Par exemple, l'enroulement se présente sous forme de 9 plis de 100 µm en opposition à un enroulement selon l'état de la technique sous forme de 3 plis de 300 µm.

A noter que le tissu destiné à être mélangé avec la résine peut être constitué par un taffetas, un satin, un sergé ou une toile sans exclure d'autres contextures.

On renvoie aux essais ci-après dans le cas d'une articulation sous forme d'une rotule composite autolubrifiante, selon les caractéristiques de l'invention et selon l'état de la technique (palier E1 et palier E2).
➢ ***Protocole***
   Nature de l'axe : 16 NC 6 CT Ra : 0.4
   Nature de palier :
      Type de palier : Rotule Ø35 x Ø55 x 25
      Mouvement : Rotation alterné sur 90°
      Pression calculée en surface projeté : 40 Mpa
      Vitesse de Glissement : 6 mm/s
➢ ***Critère d'arrêt de l'essai***
   Coefficient de frottement > 0.25
   Usure > 0.5 mm
   Nombre de cycles atteints : 365 000 cycles
➢ ***Résultats des essais***
   ▪ Palier selon l'invention :
      - Enroulement croisé
      - Largeur de la bande de tissu : 30 mm,
         épaisseur 0.10 mm
      - Usure = 0.35 mm
      - F<0.1
      - Nombre de cycles : 365 000 cycles
   ▪ Palier E1 :
      - Enroulement à 90°
      - Largeur de la bande de tissu : 1200 mm
         épaisseur 0.30 mm
      - Usure = 0.5 mm
      - F<0.2
      - Nombre de cycles : 2 500 cycles
   ▪ Palier E2 :
      - Enroulement à 90°
      - Largeur de la bande de tissu : 1200 mm
         épaisseur 0.30 mm
      - Usure > 0.5 mm
      - F<0.25
      - Nombre ce cycles : 3 000 cycles

Les avantages ressortent bien de la description, en particulier, on souligne et on le rappelle :
- une meilleure tenue à la charge dynamique due au croisement des tissus,
- une meilleure tenue à la charge statique due à une meilleure homogénéité du matériau,
- une impossibilité de grippage entre la rotule et l'axe.

## Revendications

1. Ensemble d'articulation autolubrifiant fonctionnant sous fortes charges en régime dynamique et comprenant une rotule (1) montée dans une cage (2) de l'ensemble d'articulation, ladite rotule (1) étant destinée à recevoir, avec capacité de coulissement et/ou de rotation, un axe (3) **caractérisé en ce que** la rotule est réalisée sur toute son épaisseur à partir d'un enroulement d'un tissu de faible épaisseur comprise entre 20 µm et 150 µm et mélangé avec une résine comprenant des charges, ledit tissu se présentant sous forme de bandes de largeur comprise entre 5 mm et 200 mm, lesdites bandes étant croisées selon plusieurs couches par enroulement filamentaire.

2. Ensemble selon la revendication 1 **caractérisé en ce que** l'épaisseur du tissu est comprise entre 20 µm et 130 µm.

3. Ensemble selon la revendication 1, **caractérisé en ce que** l'angle de croisure est compris entre 10° et 90°.

4. Ensemble selon la revendication 1, **caractérisé en ce que** l'angle de croisure est compris entre 30° et 86°.

5. Ensemble selon la revendication 1, **caractérisé en ce que** le tissu est du type synthétique.

6. Ensemble selon la revendication 1, **caractérisé en ce que** la résine est du type époxy, vinylester, polyester, phénolique ou polyimide.

7. Ensemble selon la revendication 1, **caractérisé en ce que** les charges sont de type PTFE, MoS2, graphite.

8. Ensemble selon la revendication 7, **caractérisé en ce que** les charges représentent entre 5 et 70 % du volume.

9. Ensemble selon l'une quelconque des revendications 1 à 8, **caractérisé en ce que** l'alésage de la rotule et sa périphérie, présentent un revêtement autolubrifiant.

## Patentansprüche

1. Selbstschmierende Scharnieranordnung, die unter hohen dynamischen Lasten arbeitet und ein Kugelgelenk (1) aufweist, das in einem Gehäuse (2) der Scharnieranordnung montiert ist, wobei dieses Kugelgelenk (1) dazu bestimmt ist, mit Gleit- und/oder Rotationsfähigkeit eine Achse (3) aufzunehmen, **dadurch gekennzeichnet, dass** das Kugelgelenk über seine gesamte Dicke aus einem Strang eines Gewebes mit einer geringen Dicke im Bereich zwischen 20 µm und 150 µm hergestellt und mit einem Füllstoffe umfassenden Harz gemischt ist, wobei das Gewebe in Form von Streifen mit einer Breite zwischen 5 mm und 200 mm vorliegt, wobei diese Streifen durch Filamentwicklung in mehreren Schichten gekreuzt sind.

2. Anordnung gemäß Anspruch 1, **dadurch gekennzeichnet., dass** die Dicke des Gewebes zwischen 20 µm und 130 µm beträgt.

3. Anordnung gemäß Anspruch 1, **dadurch gekennzeichnet, dass** der Kreuzungswinkel zwischen 10° und 90° beträgt.

4. Anordnung gemäß Anspruch 1, **dadurch gekennzeichnet, dass** der Kreuzungswinkel zwischen 30° und 86° beträgt.

5. Anordnung gemäß Anspruch 1, **dadurch gekennzeichnet, dass** das Gewebe vom synthetischen Typ ist.

6. Anordnung gemäß Anspruch 1, **dadurch gekennzeichnet, dass** das Harz vom Epoxid-, Vinylester-, Polyester-, Phenol- oder Polyimid-Typ ist.

7. Anordnung gemäß Anspruch 1, **dadurch gekennzeichnet, dass** die Füllstoffe vom PTFE-, MoS2-, Graphit-Typ sind.

8. Anordnung gemäß Anspruch 7, **dadurch gekennzeichnet, dass** die Füllstoffe zwischen 5 und 70 Vol.-% ausmachen.

9. Anordnung gemäß einem der Ansprüche 1 bis 8, **dadurch gekennzeichnet, dass** die Bohrung des Kugelgelenks und dessen Umfang eine selbstschmierende Beschichtung aufweisen.

## Claims

1. A self-lubricating joint assembly operating under high loads in dynamic state and comprising a ball joint (1) assembled in a cage (2) of the joint assembly, said ball joint (1) being destined to receive an axis (3) capable of sliding and/or rotating therein, **characterized in that** the ball joint is formed throughout its thickness from the winding of a fabric of small thickness ranging between 20 µm and 150 µm and mixed with a resin comprising fillers, said fabric appearing in the form of strips having a width ranging between 5 mm and 200 mm, said strips being crossed in several layers by filament winding.

2. The assembly of claim 1, **characterized in that** the fabric thickness ranges between 20 µm and 130 µm.

3. The assembly of claim 1, **characterized in that** the crossing angle ranges between 10° and 90°.

4. The assembly of claim 1, **characterized in that** the crossing angle ranges between 30° and 86°.

5. The assembly of claim 1, **characterized in that** the fabric is of synthetic type.

6. The assembly of claim 1, **characterized in that** the resin is of epoxy, ester vinyl, polyester, phenolic, or polyimide type.

7. The assembly of claim 1, **characterized in that** the fillers are of PTFE, MoS2, or graphite type.

8. The assembly of claim 7, **characterized in that** the fillers amount to between 5 and 70% of the volume.

9. The assembly of any of claims 1 to 8, **characterized in that** the bore of the ball joint and its periphery have a self-lubricating coating.
